# EUROPEAN PATENT APPLICATION

(11) **EP 4 647 733 A1**
(43) Date of publication of application: **12.11.2025**
(21) Application number: 25173566.8
(22) Date of filing: 30.04.2025
(51) Int. Cl.: G01L 1/22, G01L 5/1627

(54) **LOAD CELL**

(30) Priority: 06.05.2024 IT 202400010033
(71) Applicant: N.B.C. Elettronica Group S.r.l., 20123 Milano (IT)
(72) Inventor: BASSANELLI, Gianluca, Milano (IT)
(74) Representative: Buzzi, Notaro & Antonielli d'Oulx S.p.A.

(57) **Abstract**

Described herein is a load cell (10) of the type comprising:
- an annular structure (2) that extends along an annular profile (P) about a reference axis (I) and has an internal opening (4) configured to receive a structural element to be monitored; and
- a plurality of sensors (50) arranged on said annular structure (2) for detecting deformation of the latter when it is subjected to a load along said reference axis (I).

The load cell (10) is characterized in that said annular structure (2) comprises at least one first body (20I) and one second body (20II) that are set in mutual contact to form said annular structure (2) and are fixed to one another via a releasable-connection system (30, 32).

## Description

The present invention regards a load cell, in particular of the type comprising:
- an annular structure that extends along an annular profile about a reference axis and has an internal opening configured to receive a structural element to be monitored; and
- a plurality of sensors arranged on said annular structure for detecting deformation of the latter when it is subjected to a load along said reference axis.

A load cell of the type referred to above is normally used for monitoring structural elements, in particular tie rods or bars, of buildings, for example bridges, tunnels, dams, etc., or of mechanical installations, for example cable-cars, cranes, etc.

Prior-art load cells of the type in question, generally referred to as "toroidal load cells", present the drawback of requiring at least partial disassembly of the structural element to be monitored and/or of other components that engage therewith whenever the load cell has to be removed to be replaced or else to undergo checks in order to identify any possible malfunctioning.

In this context, the object of the present invention is to provide a load cell that will overcome the aforesaid drawback and that at the same time will be able to operate in a precise and reliable way.

In general, the present invention regards a load cell according to claim 1.

The claims form an integral part of the teaching provided herein.

Further characteristics and advantages of the present invention will emerge clearly from the ensuing description with reference to the annexed drawings, which are provided purely by way of non-limiting example and in which:
- Figure 1 represents an example of the load cell described herein in perspective view;
- Figure 2 is a front view of the load cell of Figure 1;
- Figure 3 is a top plan view of the load cell of Figure 1;
- Figure 4A represents a body of the load cell of Figure 1, according to a view from a first side;
- Figure 4B represents the body shown in Figure 4A according to a view from the opposite side; and
- Figure 5 and 6 are, respectively, a perspective view and a top plan view of a load cell according to the prior art.

In the ensuing description, various specific details are illustrated aimed at enabling an in-depth understanding of the embodiments. The embodiments may be obtained without one or more of the specific details, or with other methods, components or materials, etc. In other cases, known structures, materials, or operations are not illustrated or described in detail so that various aspects of the embodiment will not be obscured.

The references used herein are provided merely for convenience and hence do not define the sphere of protection or the scope of the embodiments.

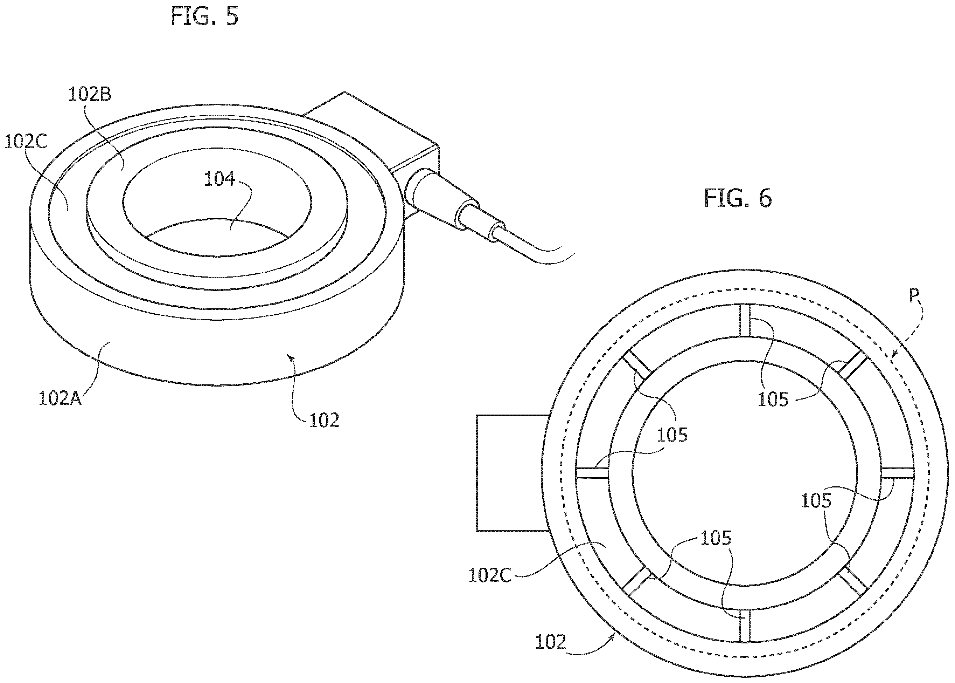

With reference to Figure 6, the load cell of a known type illustrated therein comprises an annular body 102 that extends along an annular profile P about a reference axis I and has an internal opening 104 configured to receive a structural element to be monitored.

The annular body 102 has an inner annular portion 102A, an outer annular portion 102B, and an intermediate portion 102C that joins in a radial direction the two annular portions and has a planar conformation according to a plane orthogonal to the reference axis I.

The annular body 102 has a cross section (in a radial plane parallel to the reference axis I) that remains constant along the annular profile P.

Arranged on one of the two opposite faces of the intermediate portion 102C is a plurality of sensors 105, which are evenly distributed along the annular profile P.

Specifically, the aforesaid sensors are constituted by extensometers that are arranged according to a radial orientation with respect to the reference axis R.

In the condition of installation of the load cell described above, the internal opening 104 is traversed by the structural element to be monitored, whereas the inner annular portion 102A is engaged by a component that transmits onto it the same load as that applied on the structural element.

It is evident that, to separate the aforesaid load cell from the structural element, it is first necessary to carry out disassembly of the structural element to enable the latter to be slid out of the load cell.

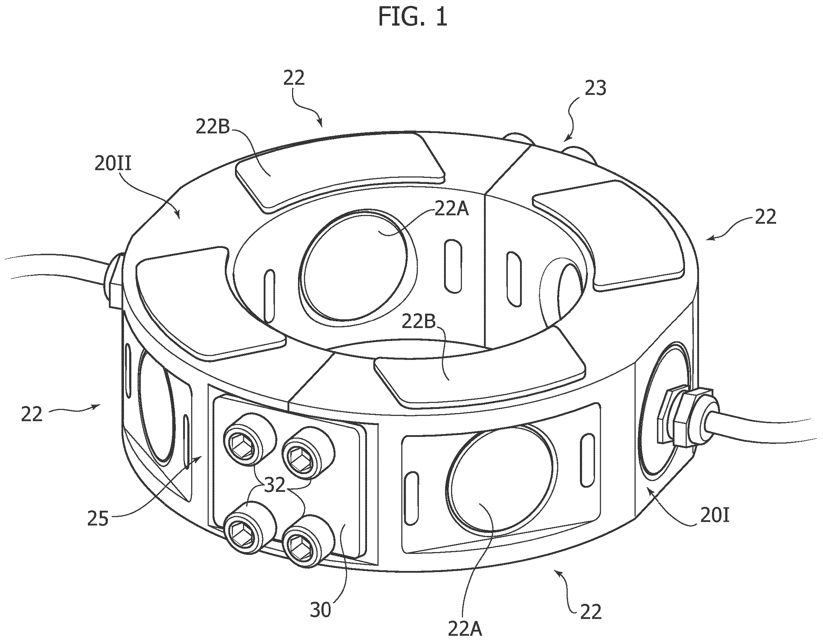

With reference now to Figures 1 to 5, the load cell described herein - designated as a whole by the reference number 10 - comprises, in a way similar to the solution according to the prior art discussed above, an annular structure 2 that extends along an annular profile P about a reference axis I and that has an internal opening 4 configured to receive a structural element to be monitored.

However, unlike the solution according to the prior art discussed above, the annular structure 2 of the load cell described herein is not formed by a body made of a single piece, but instead comprises a first body 20I and a second body 20II, which are distinct from one another and are set in mutual contact to form the annular structure 2, and are fixed to one another via a releasable-connection system so that they can be separated from one another.

In one or more alternative embodiments, the annular structure 2 of the load cell described herein may also comprise a number of distinct bodies greater than two, for example three or four.

In one or more preferred embodiments like the one illustrated, the two bodies 20I and 20II are set in contact with one another in a plane of separation S coinciding with a diametral plane of the annular structure 2. In this way, the two bodies 20I, 20II may be identical or in any case may present one and the same basic configuration, thus facilitating production of the load cell.

In one or more preferred embodiments like the one illustrated, the two bodies 20I and 20II are in mutual contact in two diametrally opposite contact regions 23, 25.

In one or more preferred embodiments like the one illustrated, each of the two bodies 20I and 20II terminates with respective opposite ends defined by plane walls 21, which lie in a radial plane of the annular structure 2 and are set against the homologous plane walls 21 of the other body, when the two bodies 20I and 20II are set in mutual contact; in this condition, the walls 21 come to coincide with the separation plane S.

Presented in what follows is a detailed description of the structure of the body 20I, which applies identically also to the body 20II.

In one or more preferred embodiments like the one illustrated, the body 20I has a semicircular profile and hence extends along one half of the annular profile P, about the reference axis I.

In one or more preferred embodiments like the one illustrated, the body 20I has two substantially circular side walls 26, 27 parallel to the reference axis I and opposite to one another; in the example illustrated, the side wall 26 is internal, whereas the side wall 27 is external, with respect to a radial direction.

In one or more preferred embodiments like the one illustrated, the body 20I has a cross section (in a radial plane parallel to the reference axis I) that is variable along the annular profile P so as to identify a pair of detection portions 22.

The detection portions 22 are characterized by a reduced cross section defining a minimum thickness in a radial direction of the body 20I.

In one or more preferred embodiments like the one illustrated, the single detection portion 22 comprises a pair of plane walls 22A parallel to the reference axis I, one facing the internal opening 4 of the annular structure 2 and the other facing in the opposite direction. The two walls 22A determine the aforesaid minimum thickness of the body 20I.

In one or more preferred embodiments like the one illustrated, the two detection portions 22 are located in positions symmetrical with respect to a diametral plane K orthogonal to the separation plane S.

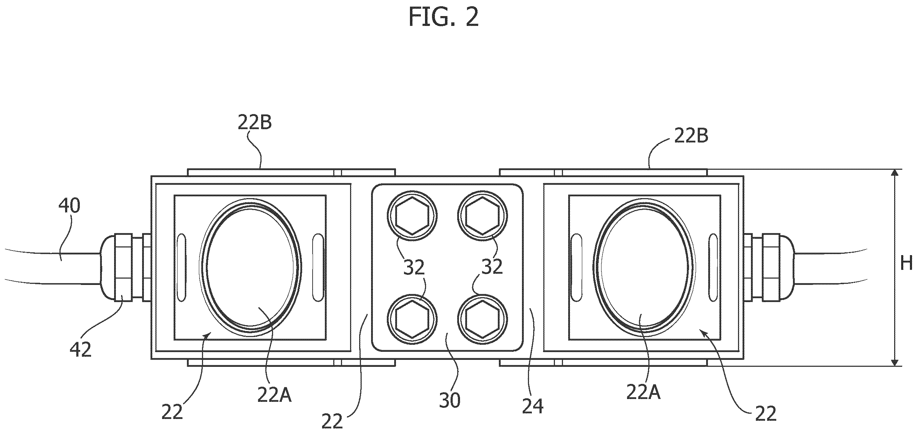

In one or more preferred embodiments like the one illustrated, the detection portions 22 moreover have a dimension H along the reference axis I greater than that of the other portions of the body 20I so as to define two opposite contact surfaces 22B, which are transverse to the reference axis I and are located in a higher or lower position, along the reference axis I, as compared to the other portions of the body 20I (with reference to the body 20I illustrated in Figure 2).

In its condition of installation, the load cell 10 is constrained to the structural element to be monitored through an engagement of its contact surfaces 22B by fixing components of a known type, which transmit to the contact surfaces 22B the same load as the one acting on the structural element to be monitored. The load transmitted to the contact surfaces 22B is identified by a vector having a single component, which is oriented in a direction parallel to the reference axis I.

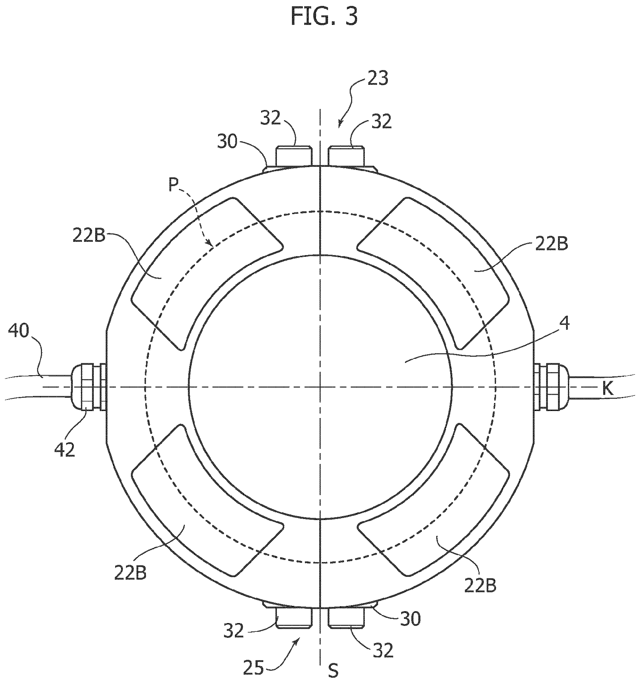

In one or more preferred embodiments like the one illustrated, the connection system for connecting together the two bodies 20I, 20II in a releasable way, comprises a pair of connection plates 30, each of which is configured to engage simultaneously two contiguous edges 24 of the two bodies 20I, 20II in mutual contact, these edges being located in one of the two contact regions 23, 25; with reference to Figure 3, one connection plate 30 is located on the top contact region 23, whereas the other connection plate 30 is located on the bottom contact region 25.

In one or more preferred embodiments like the one illustrated, the edges 24 are obtained, on each body, in one of the two side walls 26 and 27, preferably on the outer side wall 27. Alternatively, the edges 24 can be obtained in the inner side wall 26.

In one or more preferred embodiments like the one illustrated, each connection plate 30 has a planar conformation, and at the same time the edges 24 of the two bodies 20I, 20II themselves have a planar conformation suitable for receiving the single connection plate 30 in a condition in which it is set in contact with these edges over its entire area of extension and/or over the entire area of extension of the edges themselves.

In one or more preferred embodiments like the one illustrated, the edges 24 each define a plane parallel to the reference axis I.

The configuration described above of the connection plate 30 and of the edges 24 of the bodies 20I, 20II facilitates assembly of the two bodies.

Moreover, the aforesaid connection system comprises fixing members 32 via which each connection plate 30 is fixed to the respective contiguous edges 24 of the bodies 20I, 20II.

In one or more preferred embodiments like the one illustrated, the fixing members 32 are constituted by screws that engage holes (not visible in the figures) made in each connection plate 30 and fit into threaded holes (not visible in the figures) made in corresponding positions in the edges 44 of the two bodies 20I, 20II. In alternative embodiments, there may instead be envisaged the use of bolts, pins, etc. as fixing members 32.

In one or more preferred embodiments like the one illustrated, the two bodies 20I, 20II are obtained starting from one and the same semifinished body of an annular shape, which extends along the annular profile P and that has a constant cross section along this profile, in particular a cross section of a rectangular shape, of dimensions such as to enclose the cross sections of the finished bodies 20I, 20II.

The aforesaid semifinished body is divided, via cutting along the separation plane S, into two identical semifinished parts, which are then subjected to machining to obtain the two bodies 20I, 20II.

In one or more preferred embodiments, the two semifinished parts obtained from cutting of the annular body already have the opposite side walls 26, 27.

In one or more preferred embodiments, the detection portions 22 can be obtained via milling by machining the walls 26, 27 until the minimum thickness referred to above is obtained defined by the two opposite walls 22A, and locally reducing the height of the two semifinished parts along the reference axis I so as to get the contact surfaces 22B to emerge with respect to the surrounding regions.

In one or more alternative embodiments, the aforesaid milling operations can be carried out directly on the annular semifinished body, before this is divided in the aforesaid two parts via cutting.

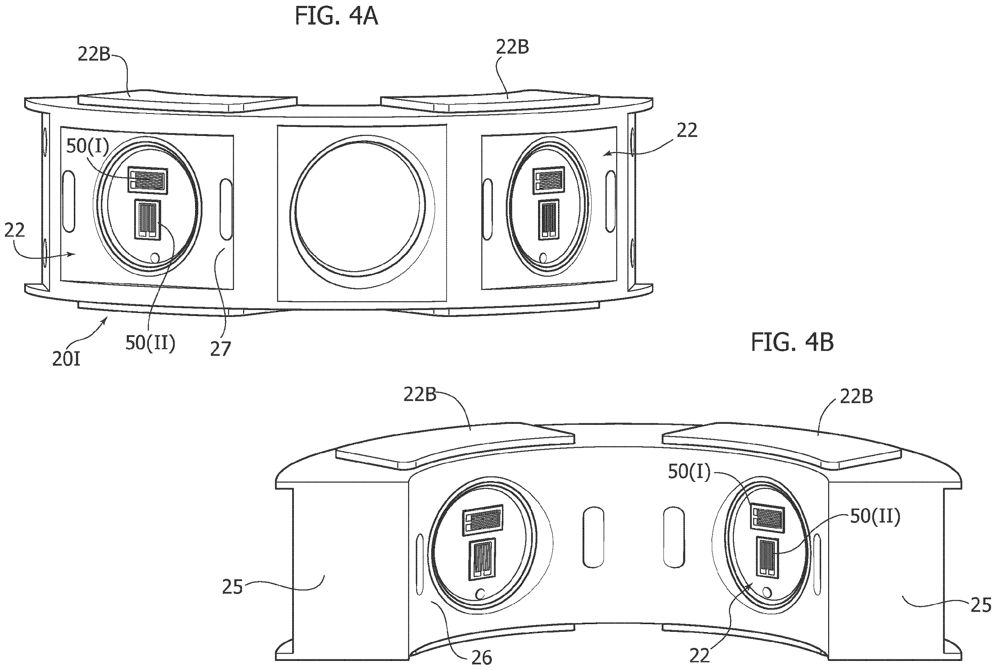

In one or more preferred embodiments like the one illustrated, arranged on the detection portions 22 are sensors 50 - illustrated only in Figures 4A and 4B - configured for detecting deformation of the detection portions 22 themselves.

In one or more preferred embodiments like the one illustrated, the sensors 50 are arranged on both walls 22A of each detection portion 22.

In one or more preferred embodiments like the one illustrated, the sensors 50 are constituted by extensometers.

In one or more preferred embodiments like the one illustrated, set on each wall 22A is a first extensometer 50(I) oriented along the reference axis I and a second extensometer 50(II) oriented in a direction perpendicular to the first.

In one or more preferred embodiments like the one illustrated, in each of the two bodies 20I, 20II, the respective sensors 50 are electrically connected to one and the same output cable 40, which is carried by a connector 42 fixed on the outer side wall 27 of the body, preferably in a position intermediate between the two detection portions 22.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

## Claims

1. A load cell (10) comprising:
- an annular structure (2) that extends along an annular profile (P) about a reference axis (I) and has an internal opening (4) configured to receive a structural element to be monitored; and
- a plurality of sensors (50) arranged on said annular structure (2) for detecting deformation of the latter when it is subjected to a load along said reference axis (I);
wherein said annular structure (2) comprises at least one first body (20I) and one second body (20II) that are set in mutual contact to form said annular structure (2) and that are fixed to one another via a releasable-connection system (30, 32).

2. The load cell according to claim 1, wherein said at least one first body (20I) and one second body (20II) extend in succession along said annular profile (P), about said reference axis (I), and each have a cross section variable along said annular profile (P) so as to identify at least one detection portion (22) having a reduced cross section, in a pre-defined position along said annular profile (P), there being arranged on said detection portion (22) at least one sensor of said plurality of sensors (50).

3. The load cell according to claim 2, wherein said reduced cross section identifies a minimum thickness in a radial direction of said first and second bodies (20I, 20II).

4. The load cell according to claim 2 or claim 3, wherein said detection portion (22) comprises two walls (22A) that are plane and parallel to said reference axis (I), one facing said internal opening (4) and the other facing in the opposite direction, which identify said minimum thickness.

5. The load cell according to claim 4, wherein positioned on at least one of said two plane walls (22A) is at least one sensor of said plurality of sensors (50).

6. The load cell according to claim 5, wherein said sensors are extensometers and wherein positioned on at least one of said two plane walls (22A) are a first extensometer (50(I)) oriented in a direction parallel to said reference axis (I) and a second extensometer (50(II)) oriented in a direction orthogonal to said reference axis (I).

7. The load cell according to claim 2 or claim 3, wherein said detection portion (22) has a dimension (H) along said reference axis (I) that is greater than that of the other portions of said body so as to define at least one contact surface (22B), which is transverse to said reference axis (I) and is set in a position higher or lower than the adjacent surfaces of said other portions of said body along said reference axis (I).

8. The load cell according to any one of the preceding claims, wherein said first and second bodies (20I, 20II) are both obtained in a single piece by machining starting from an annular semifinished body that extends along said annular profile (P).

9. The load cell according to any one of the preceding claims, wherein said connection system comprises at least one connection plate (30), configured to engage simultaneously two contiguous edges (24) of said first and second bodies (20I, 20II) in mutual contact, and fixing members (32), in particular screws, via which said connection plate (30) is fixed in a removable way to said edges (24) of said first and second bodies (20I, 20II),
wherein said connection system preferably comprises a second connection plate (30) configured to engage simultaneously two contiguous edges (24) of said first and second bodies (20I, 2011) in mutual contact, said edges being located in a region of contact (25) of said first and second bodies (20I, 20II) that is diametrally opposite to the contact region (23) of the two contiguous edges (24) engaged by said first connection plate (30).

10. The load cell according to claim 9, wherein said connection plate (30) has a planar conformation and wherein said contiguous edges (24) themselves have a planar conformation, each edge defining a plane parallel to said reference axis (I).
